# EUROPÄISCHE PATENTSCHRIFT

(11) **EP 2 791 269 B1**
(45) Veröffentlichungstag und Bekanntmachung des Hinweises auf die Patenterteilung: **19.08.2015**
(21) Anmeldenummer: 12820855.0
(22) Anmeldetag: 15.12.2012
(51) Int. Cl.: C09K 3/32, C02F 1/68, E02B 15/06, E02B 15/08, B01J 20/28, E02B 15/10

(54) **ABSORPTIONSMITTEL, DAS DEN SÄTTIGUNGSGRAD ANZEIGT**
ABSORBENT INDICATING THE DEGREE OF SATURATION
MOYEN D'ABSORPTION INDIQUANT LE DEGRÉ DE SATURATION

(30) Priorität: 16.12.2011 DE 102011056520
(43) Veröffentlichungstag der Anmeldung: 22.10.2014
(73) Patentinhaber: Papier in Form und Farbe GmbH, 09496 Marienberg (DE)
(72) Erfinder: NEHRKORN, Arnd, 09111 Chemnitz (DE); GOEDEL, Werner, 09116 Chemnitz (DE); BRAND, Joachim, 09496 Marienberg (DE)
(74) Vertreter: Thomas, Matthias
(86) Internationale Anmeldenummer: PCT/DE2012/100381
(87) Internationale Veröffentlichungsnummer: WO 2013/087072

(56) Entgegenhaltungen:
- WO-A1-2010/144802
- DE-A1-102011 000 349
- US-A- 5 037 557
- US-A- 5 429 741
- US-A- 5 688 074

## Beschreibung

Die Erfindung betrifft ein Absorptionsmittel, das vor, während und nach Sorptionsvorgängen den Sättigungsgrad anzeigt. Die Erfindung betrifft insbesondere ein Absorptionsmittel, das auf Flüssigkeiten schwimmen kann und seinen Sättigungsgrad durch äußere Merkmale anzeigt.

Häufig stellt sich die Aufgabe, möglichst einfach und vor Ort zu erkennen, ob ein Absorptionsmittel mit einer aufzunehmenden Substanz gesättigt ist und somit eine weitere Zugabe an Absorptionsmitteln bzw. deren Austausch notwendig ist. Weiter, ob die aufgebrachte Menge an Absorptionsmittel noch ausreichend ist, um weitere Substanz zu binden.

In der Industrie sind verschiedene Absorptionsmittel bekannt. Solche Absorptionsmittel können aus Substanzen bestehen, in denen sich die aufzunehmende Substanz löst. Es können ebenso poröse Körper mit Hohlräumen sein, in denen sich die aufzunehmende Substanz aufgrund von Kapillarkräften einlagert.

Zur Anzeige des Sättigungsgrades des Absorptionsmittels dient in vielen Fällen ein Farbumschlag eines Indikators, der dem Absorptionsmittel zugesetzt ist, wie dies bekanntermaßen bei Silicagel der Fall ist. Diese Möglichkeit scheidet jedoch aus, wenn ein Absorptionsmittel die Aufgabe hat, etwa in einer Flüssigkeit schwimmend eine Substanz zu absorbieren, die das Absorptionsmittel stark verschmutzt, es ganz oder teilweise in sich aufnimmt oder wenn das schwimmende Absorptionsmittel zudem in einer sich ständig bewegenden Flüssigkeit angewendet wird.

Häufig stellt sich jedoch die Aufgabe, auf Flüssigkeiten schwimmende spezifisch leichtere Stoffe aufzunehmen. Dies ist zum Beispiel dann der Fall, wenn Stoffe mit gegenüber der Flüssigkeit geringerer Dichte bei technologischen Prozessen verloren gehen und die Verlustmengen beseitigt werden müssen oder wenn ölige Verschmutzungen auf Wasseroberflächen auftreten, wie dies vor allem auch bei Havarien der Fall ist.

Es wird häufig versucht, solche Fremdstoffe durch chemische Reaktionen auszufällen. In gleicher Weise können physikalische Prozesse dazu dienen, solche Fremdstoffe an spezifisch schwere Körper zu binden und die entstehenden Agglomerate auszufällen.

Die oben aufgeführten Möglichkeiten lassen sich noch einigermaßen beherrschen, wenn es sich um geringe Volumina und Anordnungen innerhalb technischer Anlagen handelt. Bei Havarien, Verunreinigungen in offenen Gewässern und in den Weltmeeren können solche Verfahren zwar zur Reinigung des Oberflächenwassers eingesetzt werden, jedoch wird dabei die offensichtliche Umweltverschmutzung nicht beseitigt, sondern nur zu einem anderen Umweltproblem gemacht.

Bei größeren Havarien, beispielsweise bei Ölverschmutzungen von Gewässern, ist es auch üblich, die schwimmenden Schadstoffe durch eine schwimmende Barriere an einer weiteren Verbreitung zu hindern. Dies bewirkt jedoch nicht die Beseitigung der Verschmutzungen.

Nach einem Vorschlag in DE 42 22 438 A1 kann eine solche schwimmende Barriere auch absorbierend ausgeführt sein. Es ist vorgeschlagen, in einen perforierten Schlauch - die eigentliche Schwimmbarriere - ein absorbierendes Glasfasergewebe einzubringen.

Nach diesem Vorschlag erfolgt eine Absorption im Grenzbereich flächiger Verschmutzungen, sodass lediglich eine sich weiter ausdehnende Verschmutzung vermieden werden kann.

Die schwimmende Barriere ist so ausgeführt, dass sie mit einem kreisförmigen Querschnitt auf der Wasseroberfläche schwimmt und ein dreieckförmiger, sich nach unten verjüngender Bereich in das Wasser eintaucht und die Barriere durch sein größeres Eigengewicht in der gewünschten Solllage hält.

Bei der so ausgeführten Barriere ist der Absorptionsgrad äußerlich nicht feststellbar, da diese sich stets in der gleichen Lage befindet. Ferner ist aus praktischen Gründen eine durchgängige Perforation des Schlauches notwendig, wodurch allerdings von außerhalb der Barriere ebenfalls ein Wasserzutritt und in dessen Folge Lösungs- bzw. Emulgationsvorgänge möglich sind. Die dabei entstehende Gewässerverschmutzung ist zwar deutlich geringer, aber vorhanden.

Ein Vorschlag in US 5 037 557 A für ein Absorptionsmittel, das Kohlenwasserstoffe an Flüssigkeitsoberflächen absorbieren kann, bezieht sich auf behandelte Kieselsäure, die an der Flüssigkeitsoberfläche schwimmende Kohlenwasserstoffe an sich binden, Flocken bilden und so die Flüssigkeitsoberfläche reinigen soll. Dieses beschriebene Verfahren sieht jedoch keine Möglichkeit vor, den Sättigungsgrad zu erkennen. Ebenso wenig ist eine Möglichkeit vorgesehen, das Absammeln der entstandenen Flocken an der Flüssigkeitsoberfläche zu erleichtern.

Ein weiterer Vorschlag aus WO 2010/144802 A1 bezieht sich auf polymere Schäume, die hydrophob ausgerüstet sind und auf eine Flüssigkeitsoberfläche aufgebracht werden können, wo sie absorbieren können. Auch bei diesem Vorschlag ist kein Hinweis auf Möglichkeiten zur Erkennung des Sättigungsgrades enthalten. Ebenso wenig sind Möglichkeiten zum einfachen Absammeln gesättigter Schaumstoffkörper eröffnet. Problematisch ist weiterhin die Unterscheidung zwischen gesättigten und ungesättigten Schaumstoffkörpern.

In US 5 429 741 A1 ist ein Vorschlag gegeben, in einem strömenden Medium, das mit Verschmutzungen belastet ist, ein auf Cellulosebasis arbeitendes Absorptionsmittel zuzugeben, das im Medienstrom enthaltenen Schmutz an sich bindet und diesen ausfällt. Auch bei diesem Vorschlag ist nicht ausgeführt, wie der Sättigungsgrad des Absorptionsmittels festgestellt werden kann, und es wird weiterhin kein Vorschlag für ein Absammeln des gesättigten Absorptionsmittels gegeben.

Für das Entfernen öliger Verschmutzungen in Gewässern soll nach einem Vorschlag in DE 10 2005 009 420 B4 eine Kapsel verwendet werden, die als doppelwandige Kapsel ausgeführt ist, öffenbar ist und in ihrem Inneren ein Absorptionsmittel aufnimmt. Die Gesamtanordnung ist so ausgelegt, dass die Kapseln zunächst in einer ersten Orientierung auf dem Wasser schwimmen. Diese erste Orientierung wird mit Hilfe von zusätzlichem Ballast in der Kapsel erzwungen. Durch Strömung, Wellenbewegungen und dergleichen soll über in der Kapsel vorhandene Öffnungen Wasser in die Kapsel eindringen, mit dem darin enthaltenen Absorptionsmittel in Kontakt kommen und auf diese Weise die Wasseroberfläche gereinigt werden.

Bei fortschreitendem Absorptionsprozess und damit zunehmendem Absorptionsgrad soll sich in diesen Kapseln eine Schwerpunktverlagerung ergeben. Diese soll schließlich zum Kippen um 180° führen. Zugleich soll die Umorientierung der Kapseln durch eine Farbgebung an der Oberfläche derselben noch zusätzlich signalisiert werden kann. Die Umorientierung der Kapseln soll also durch eine Verschiebung des Schwerpunktes in den Bereich der absorbierten Stoffe erreicht werden. Dies erscheint zumindest beim Einsatz in bewegten Flüssigkeiten fraglich. Selbst die vorgeschlagene farbige Markierung kann dieses Problem nicht lösen. Zufälligkeiten beim Absorptionsvorgang und Wellenbewegungen können einen deutlich größeren Einfluss auf den Betrag der Schwerpunktsverlagerung haben.

Gesättigte Kapseln sollen dann abgesammelt, nach dem Absammeln geöffnet, das gesättigte Absorptionsmittel entnommen werden und nach dem Wiederbefüllen ein erneuter Einsatz der regenerierten Kapseln möglich sein.

Die Verwendung einer solchen doppelwandigen Kapsel, gefüllt mit einem Absorptionsmittel, birgt eine Reihe von Nachteilen. Die kugelförmige Kapsel soll ihre Orientierung auf der Wasseroberfläche mit zunehmender Absorption ändern. Das Absorptionsmittel ist jedoch lose in die Kapsel eingefüllt und kann sich im Innenraum beliebig bewegen. Der bevorzugte tiefliegende Schwerpunkt wird dementsprechend auch durch die Lage des Absorptionsmittels im Innenraum der Kapsel bestimmt. Auf bewegten Wasseroberflächen kann es deshalb zu Verschiebungen des Absorptionsmittels kommen, die eine genaue Feststellung des Absorptionsgrades einer einzelnen Kapsel unmöglich machen.

Ferner ist die Kontaktfläche zwischen Flüssigkeit, zu absorbierenden Stoffen und dem Absorptionsmittel durch die doppelwandige Kapsel und die wenigen darin enthaltenen Öffnungen stark vermindert. Jedenfalls wird durch diese Konstruktion der Absorptionsprozess deutlich verlängert.

Die Eintauchtiefe der Kapsel ist auch von der Dichte der Flüssigkeit abhängig. Es ist möglich, dass die Öffnungen der Kapsel die zu absorbierenden Stoffe nicht erreichen. Bei unbewegten Flüssigkeiten setzt dann die Absorption aus.

Des Weiteren ist für die Herstellung der am Absorptionsprozess nicht beteiligten Kapsel ein erheblicher Aufwand erforderlich.

Selbst bei einer möglichen Regenerierung eines solchen Absorptionsmittels entstehen Probleme. Beispielsweise ist für eine mechanisierte Öffnung der doppelwandigen Kapsel keine ausreichende Lageorientierung möglich. Ein hoher Wiederverwendungsgrad der Absorptionsmittel lässt sich deshalb auch nur unter Einbeziehung manueller Verfahren der Sortierung erreichen. Wegen des Umgangs mit Schad- oder gegebenenfalls Giftstoffen sind erhöhte Sicherheitsanforderungen vorhanden, und das Personal ist Gesundheitsrisiken ausgesetzt.

Die Verwendung von Absorptionsmitteln mit einer umhüllenden Kapsel erscheint deshalb wegen der prinzipbedingten Nachteile nicht praktikabel.

Die Patentanmelderin hat in DE 10 2011 000 349 A1 den Einsatz dreidimensionaler gewickelter und rotationssymmetrischer Körper aus Faserstoffen als Absorptionsmittel vorgeschlagen. Die Körper absorbieren an ihrer gesamten Oberfläche. Sie können teilweise bereits durch die verwendeten Faserstoffe andere Stoffe absorbieren. Außerdem ist durch gezielte Beigabe absorbierender Stoffe während des Wickelvorganges eine besondere Affinität zur Absorption bestimmter Arten von Schadstoffen einstellbar. Durch eine besondere Ausgestaltung des Wickelverfahrens ist es möglich, innerhalb des Wickelkörpers Dichteunterschiede oder Hohlräume zur Aufnahme von Absorptionsmittel gezielt herzustellen und so die Effektivität des Absorptionsvorganges zu steigern. Die bei der Herstellung erzeugten Dichteunterschiede bewirken im Ausgangszustand eine Schwerpunktlage, die der Körper bevorzugt einnimmt, während er im Verlauf des Absorptionsprozesses eine Änderung der Schwerpunktlage erfährt und damit auch seine Lage in der Flüssigkeit ändert.

Diese Absorptionsmittel sollen so funktionieren, dass sie auf einer Flüssigkeitsoberfläche schwimmen und den zu absorbierenden Stoff in sich aufnehmen oder oberflächlich an sich binden. Dabei nehmen diese Absorptionsmittel bedingt durch ihre Form, den inneren Aufbau und gegebenenfalls enthaltene Zusatzstoffe beim Aufbringen auf die Flüssigkeitsoberfläche eine erste stabile Gleichgewichtslage ein. Mit Beginn des Absorptionsvorganges wird die erste Gleichgewichtslage durch Dichteveränderungen des Absorptionsmittels zunehmend labil. Mit Erreichen des höchstmöglichen Sättigungsgrades verschiebt sich der Schwerpunkt des Körpers in Richtung des ursprünglich spezifisch leichteren Teils des Körpers. Dadurch verändert das Absorptionsmittel seine Lage soweit, dass es in einen zweiten stabilen Gleichgewichtszustand kommt. Es richtet sich auf. Der Übergang von der ersten in die zweite stabile Gleichgewichtslage erfolgt durch Verschiebung des Schwerpunktes des Körpers im Ergebnis des Absorptionsprozesses. Dieser zweite stabile Gleichgewichtszustand soll visuell wahrnehmbar sein oder durch zusätzlich eingebrachte Bauelemente dergestalt signalisiert werden, dass gerade durch diese zusätzlichen Bauteile auch ein Absammeln der Absorptionsmittel mit mechanischen Einrichtungen möglich ist.

Die nach diesem Vorschlag zu erzeugenden Absorptionsmittel sind rotationssymmetrisch, das heißt sie können als Kugel, Ellipsoid, in Eiform oder als Zylinder hergestellt werden. Nach dieser Erfindung sollen sie zudem mit einem zusätzlichen Element ausstattbar sein, das zur Verbesserung der Signalwirkung einerseits und als Hilfsmittel zum Absammeln von der Flüssigkeitsoberfläche andererseits dienen kann.

Der wesentlichste Nachteil der Absorptionsmittel nach DE 10 2011 000 349 A1 besteht darin, dass sie in einem aufwendigen Wickelverfahren, das während des Wickelns zwingend die Erzeugung von zwei Bereichen unterschiedlicher Dichte sicherstellen muss, hergestellt werden müssen. Ferner, dass das Wickelverfahren bei einer anderen Ausführungsform der Absorptionsmittel die Zugabe von Stoffen während des Wickelns erlauben muss. Darüber hinaus ist nachteilig, dass ihre Herstellung die Anwendung eines Wickelverfahrens erfordert und entsprechende Wickelmaschinen aus dem Stand der Technik stets nur das Wickeln eines einzelnen rotationssymmetrischen Körpers erlauben. Dadurch ist vor allem die Produktivität bei der Herstellung solcher Art Absorptionskörper eingeschränkt, und die Herstellungskosten sind hoch.

Es ist deshalb Aufgabe der Erfindung, das aus DE 10 2011 000 349 A1 bekannte rotationssymmetrische Absorptionsmittel so weiterzuentwickeln, dass es nicht mehr mit zwei Bereichen unterschiedlicher Ausgangsdichte ausgeführt werden muss, leicht, einfach und kostengünstig herstellbar ist, den Sättigungsgrad durch eine Lageänderung anzeigt, im großen wie im kleinen Maßstab einsetzbar ist und bei dem die Erkennung der jeweiligen Gleichgewichtslage durch geometrische Merkmale des Absorptionsmittels möglich ist.

Diese oben stehende Aufgabe wird gelöst mit einem Absorptionsmittel, das den Sättigungsgrad anzeigt, mit den Merkmalen des kennzeichnenden Teils des Patentanspruches 1 in Verbindung mit den Merkmalen des Oberbegriffes dieses Patentanspruches. Die oben stehende Aufgabe wird weiter gelöst mit einem Absorptionsverfahren, das unter Anwendung des erfindungsgemäßen Absorptionsmittels auszuführen ist, mit den Merkmalen des kennzeichnenden Teils des Patentanspruches 13 in Verbindung mit den Merkmalen des Oberbegriffes dieses Patentanspruches. Neben- und nachgeordnete Patentansprüche beschreiben Ausführungsformen des erfindungsgemäßen Absorptionsmittels.

In der nachstehenden Beschreibung, den Ausführungsbeispielen und den Patentansprüchen werden die nachstehend aufgeführten Begriffe mit folgendem Bedeutungsinhalt verwendet:
Absorptionsmittel - ist ein dreidimensionaler Körper, der überwiegend aus einem Werkstoff besteht, der auf Flüssigkeitsoberflächen schwimmende Substanzen in sich aufnehmen oder an sich binden kann. Zugleich ist das Absorptionsmittel wenigstens im Ausgangs- und im Endzustand auf der jeweiligen Flüssigkeit schwimmfähig.
Körper - ist ein schwimmfähiges räumliches Gebilde, das überwiegend aus Werkstoffen besteht, die auf einer Flüssigkeitsoberfläche schwimmende Substanzen aufnehmen oder an sich binden können, wobei die aufzunehmenden Substanzen auch in Hohlräume im Inneren des Körpers eingelagert werden können. Es hat eine gegenüber der Flüssigkeit niedrigere Dichte und eine sehr geringe Benetzbarkeit. Zugleich hat der Körper äußere Merkmale oder zusätzliche Merkmale, die seine Lage auf oder in der Flüssigkeit erkennbar machen.
Orientierung - ist eine Lage des Körpers auf einer Flüssigkeitsoberfläche oder eingetaucht in eine Flüssigkeit, die zumindest kurzzeitig stabil ist.
Äußeres Merkmal - ist ein Merkmal des Körpers, durch das eine Orientierung auf oder in einer Flüssigkeit erkennbar ist und das einen Rückschluss auf den Sättigungsgrad des Körpers mit einer aufzunehmenden Substanz zulässt.

Nach der Erfindung wird ein Absorptionsmittel mit einer weitgehend homogenen Dichteverteilung und einer Geometrie, die ein Erkennen der Lage des Absorptionsmittels auf einer Flüssigkeit schwimmend ermöglicht, vorgeschlagen. Dieses Absorptionsmittel ist als geometrischer Körper ausgeformt und kann auf eine Flüssigkeitsoberfläche aufgebracht werden. Zunächst hat es gegenüber der Dichte der Flüssigkeit eine deutlich geringere Dichte. Ein solcher Körper kann auf einer Flüssigkeitsoberfläche und nur leicht eingetaucht schwimmfähig sein. Auf der Flüssigkeitsoberfläche schwimmend kann das Absorptionsmittel ebenfalls auf der Flüssigkeitsoberfläche schwimmende Substanzen aufnehmen, für die es eine besonders große Aufnahmekapazität besitzt. Gleichzeitig hat das Absorptionsmittel in Bezug auf die Flüssigkeit nur eine geringe Aufnahmekapazität, sodass es diese nicht oder nur in geringem Maße aufnimmt.

Der Körper, der das Absorptionsmittel bildet, nimmt beim Aufbringen auf die Flüssigkeitsoberfläche eine erste Vorzugsstellung ein, die zugleich eine erste Orientierung des Körpers ist und für die Feststellung des Sättigungszustandes als ungesättigt dienen kann.

Mit zunehmender Absorption der aufgenommenen Substanzen erhöht sich die Dichte des Absorptionsmittels, wodurch dieses tiefer in die Flüssigkeit einsinkt, instabil wird und sich aus seiner ersten Orientierung heraus bewegt. Das heißt, es erfolgt eine Schwenkbewegung des Körpers, die visuell oder mit technischen Mitteln erkennbar ist.

Mit Erreichen eines nahezu vollständigen Sättigungsgrades hat sich der Körper des Absorptionsmittels verdreht und eine stabile Gleichgewichtslage eingenommen. Er ist in dieser zweiten Position stabil, sodass wiederum visuell oder mit technischen Mitteln die entsprechende Orientierung des Körpers ermittelbar ist.

Nach der Erfindung wird also über eine Dichteänderung im Körper eine Änderung der Orientierung des Körpers in der Flüssigkeit erreicht. Ferner wird nach der Erfindung die Orientierung jeweils durch wahrnehmbare Merkmale detektierbar.

Neben den oben erläuterten Eigenschaften ist also Wirksamkeitsvoraussetzung, dass die aufzunehmenden Substanzen in ihrer Dichte zwischen der Dichte des Absorptionsmittels und der Dichte der Flüssigkeit liegen. Am Ende und bei Erreichen eines maximalen Absorptionsgrades hat das Absorptionsmittel gewöhnlich eine Dichte, die unter der der aufgenommenen Substanzen liegt. Es bleibt damit weiter schwimmfähig.

Das erfindungsgemäße Absorptionsmittel ist ein Körper, der aus einem Werkstoff mit sehr geringer Dichte besteht. Die Dichteverteilung innerhalb des Körpers ist weitgehend homogen.

Bedingt durch eine Außenform, die einer bestimmten Symmetrieregel folgt, nimmt der Körper beim Aufbringen auf eine Flüssigkeitsoberfläche eine Lage ein, die einer ersten Orientierung entspricht.

Zunächst sinkt der Körper aufgrund seines Eigengewichtes nur um einen geringen Betrag in die Flüssigkeit ein und verdrängt so viel Flüssigkeit, wie es seinem Eigengewicht entspricht. Die Ausrichtung des Körpers ergibt sich danach, dass in Fortsetzung der Flüssigkeitsoberfläche durch den Körper eine Ebene gezogen werden kann, wobei diese Ebene rechtwinklig zu einer Geraden liegt, die durch die Verbindung des Schwerpunktes des Körpers und des Schwerpunktes des abgetrennten Abschnitts verläuft. Die Ebene und die Gerade durch beide Schwerpunkte stehen stets in einem rechten Winkel zueinander.

Mit dem Aufbringen auf die Flüssigkeitsoberfläche kommt der Körper mit den zu absorbierenden Substanzen in Kontakt. Diese Kontakte finden zunächst an der Oberfläche des Körpers statt und es beginnt ein Diffusionsvorgang, wobei die aufzunehmenden Substanzen stark bevorzugt aufgenommen werden. In einem gewissen Anteil kann gegebenenfalls Flüssigkeit aufgenommen werden.

Der Absorptionsvorgang bewirkt zunächst eine von der ersten Orientierung stark abweichende Dichteverteilung, die sich außerdem ständig weiter ändert. Dadurch gerät der Körper aus dem Gleichgewicht und ist bestrebt, eine stabile Gleichgewichtslage einzunehmen.

Kernpunkt der Erfindung ist, dass das gesättigte Absorptionsmittel bedingt durch die Form des Körpers im Ergebnis des Absorptionsprozesses eine vom Ausgangszustand unterscheidbare Orientierung einnimmt, ohne dass es hierzu einer Verschiebung des Schwerpunktes oder einer selektiven Aufnahme von Substanzen in bestimmten Bereichen des Absorptionsmittels bedarf.

Der Körper ist im Ausgangszustand sowohl gegenüber der Flüssigkeit als auch gegenüber den zu absorbierenden Substanzen ausgesprochen leicht und nähert sich mit zunehmender Absorption mit seiner Dichte der Dichte der aufzunehmenden Substanzen an. Er erreicht jedoch in keinem Fall die Dichte der Flüssigkeit und bleibt deshalb stets schwimmfähig.

Bedingt durch die Dichteerhöhung sinkt der Körper tiefer in die Flüssigkeit ein und verändert seine Lage in der Flüssigkeit stetig. Schließlich erreicht er eine stabile Gleichgewichtslage, bei der er im Idealfall gerade noch schwimmt und gerade noch ein kleiner Volumenanteil aus der Flüssigkeit heraus ragt. Hat der Körper diese stabile Gleichgewichtslage eingenommen, lässt sich wie am Beginn des Absorptionsvorganges in Fortsetzung der Flüssigkeitsoberfläche eine Ebene durch den Körper ziehen und es ist wiederum möglich, eine Verbindungsgerade vom Schwerpunkt des Körpers zum Schwerpunkt des abgetrennten Volumens zu ziehen. Die Lage der Ebene und die Lage der Verbindungsgerade bilden wiederum einen rechten Winkel zueinander.

Es ist möglich, dass schon während des Absorptionsvorganges eine Lageänderung dergestalt erfolgt, dass die stabile Gleichgewichtslage des Körpers bereits bei einer teilweisen Absorption eingenommen wird und bis zum Erreichen der Sättigungsgrenze bestehen bleibt.

Die obige Beschreibung des Absorptionsvorganges und der Lageänderung beschreibt auf idealisierte Weise die Lageänderung des das Absorptionsmittel bildenden Körpers in der Flüssigkeit, auf bzw. in der er schwimmt. Bei bewegten Flüssigkeiten, beispielsweise bei Wellengang, sind solche idealisierten Verhältnisse nicht gegeben, die Wirkungsweise bleibt jedoch dieselbe.

Es wird davon ausgegangen, dass die durch die beiden Ebenen abgetrennten Volumenanteile im Ausgangs- und im Endzustand ca. 10 % des Volumens des Körpers betragen. Das heißt, der Körper muss eine sehr geringe Dichte gegenüber der Flüssigkeit haben.

Da der Körper in seiner Raumform einer Regel folgen muss, ergeben sich für dessen Raumform verschiedene Gestaltungsmöglichkeiten. So kann der Körper eine Cₙ-Symmetrie haben, wobei n stets eine Zahl > 1 ist. Ebenso kann er eine Rotations- oder eine Spiegelsymmetrie haben. In jedem Fall muss sich wenigstens eine stabile Gleichgewichtslage des auf der Flüssigkeit schwimmenden Körpers ausbilden können.

Die Raumform des Körpers ist ferner so, dass die stabile Gleichgewichtslage für die Symmetrieachse des Körpers gegenüber der ersten Orientierung eine Lageänderung von wenigstens 5°, besser noch um einen größeren Winkelbetrag, ergibt.

Wird beispielsweise ein langgestreckter Körper mit einem Querschnitt eines gleichseitigen Dreiecks auf die Flüssigkeitsoberfläche aufgebracht, ändert dieser seine Orientierung sogar um einen Winkelbetrag von 60°.

Die oben angeführte langgestreckte Form des Körpers kann auch mit anderen symmetrischen Querschnittsformen ausgeführt werden. So beispielsweise in einer allgemeinen Dreieckform oder in einem trapez-, tropfen-, ei- oder ellipsenförmigen Querschnitt.

Kürzere Bauteile können als eigenständige geometrische Form beispielsweise pyramiden- oder pyramidenstumpfähnlich ausgeführt sein. Ebenso ist es möglich, rotationssymmetrische Formen, wie einen Kegel, einen Kegelstumpf, einen Kegelabschnitt oder Abschnitte eines Ellipsoids zu verwenden. Möglich ist auch die Verwendung kombinierter geometrischer Formen, wie beispielsweise ein Querschnitt aus einer Kombination aus einem Dreieck und einem Halbkreis, einem Bogendreieck, ein dreieckiger Querschnitt mit einer einseitigen Hohlform und ähnliches.

Da der Körper im Ausgangszustand eine sehr geringe Dichte haben soll, sind für dessen Herstellung gut absorbierende Werkstoffe einsetzbar, die zugleich eine sehr geringe spezifische Dichte haben.

Hierbei sind bevorzugt Faserstoffe, wie Zell- oder Baumwolle, Haare, synthetische Fasern oder Schaumstoffe oder porenreiche gesinterte oder gepresste Stoffe einsetzbar.

Vorteilhaft ist dabei die Herstellung als Wickelkörper aus Faserstoffen bzw. Haaren, als verfilzter Körper oder als Pressling, der durch thermische Verfahren oder mithilfe von Bindemitteln erzeugt sein kann. Es kann notwendig sein, zwischen einzelnen Fasern eine Bindung herzustellen, wobei diese durch Filzen, durch Bindemittel, thermisch oder durch die Wirkung von Molekularkräften erreichbar ist. Ebenso geeignet sind offenporige Schaumstoffe, die durch Urformen oder Zuschnitt in die entsprechende Raumform gebracht werden können.

Es ist weiterhin möglich, die Körper durch Einblasen oder Einsaugen in eine Hohlform zu erzeugen.

Es ist weiterhin möglich, die Körper aus einem vorgeformten Rohling in eine vorgegebene Endform zu pressen.

Eine weitere Ausführungsform der Körper sieht eine Herstellung aus einzelnen Partikeln vor. Dies kann durch Pressen, Sintern oder mit Hilfe von Bindemitteln geschehen.

Die Auswahl der Grundstoffe für die einzusetzenden Partikel ist freigestellt, solange die Herstellung von Körpern möglich ist, die wenigstens im Ausgangszustand auf einer Flüssigkeitsoberfläche gut schwimmfähig sind.

Sofern die Flüssigkeit wie in den meisten Fällen Wasser ist, kann ein wasserabweisender oder ein entsprechend vorbehandelter Grundstoff für die Herstellung des Körpers eingesetzt werden. Hierbei sind Körper aus synthetischen Fasern oder aus Schaumstoffen besonders bevorzugt.

Um den Absorptionsvorgang zu beschleunigen, können die Körper mit die Aufnahme der zu absorbierenden Substanzen beschleunigenden Zusatzstoffen oder Zusatzstoffgemischen versetzt werden.

Um eine vollzogene Lageänderung des Körpers besser wahrnehmen zu können, kann der Körper durch verschiedene Maßnahmen zusätzlich ausgestattet sein. So kann beispielsweise die bei Erreichen der stabilen Gleichgewichtslage aus der Flüssigkeit heraus ragende Oberfläche des Körpers eingefärbt sein. Sie kann ebenso bedruckt sein, kann erkennbar aus der Flüssigkeit heraus ragende Oberflächenformen haben oder sie kann mit zusätzlichen Elementen kenntlich gemacht werden.

Solche zusätzlichen Elemente können beispielsweise Drahtstifte, -schlaufen, Elemente mit Verdickungen, mit angesetzten Teilen oder dergleichen sein. Diese ermöglichen es zudem, durch bestimmte geometrische Formen eine Verbindung mit Förderorganen herzustellen, sodass ein mechanisiertes Absammeln vollständig gesättigter Körper möglich ist.

Solcher Art zusätzlich angebrachte Bauteile können gleichfalls der Sortierung der Körper nach dem erreichten Absorptionsgrad dienen. Darüber hinaus können solche Teile auch als Hilfsmittel für das Absammeln bei manuellen oder maschinellen Sammeltechniken sein.

Ausschließlich oder auch in Kombination mit anderen Mitteln können auch so genannte RFID-Elemente in den Körper integriert sein. Diese ermöglichen ebenso eine Selektierung der Lage des Körpers in der Flüssigkeit und ermöglichen auf diese Weise auch ein automatisiertes Sammeln vollständig gesättigter Körper.

In Abhängigkeit von der Raumform können auch mehr als 2 Gleichgewichtslagen ausgebildet werden. So können beispielsweise Zwischenzustände während des Absorptionsvorganges signalisiert werden oder der Körper hat mehr als eine stabile Gleichgewichtslage im Zustand der Erschöpfung seiner Aufnahmekapazität. Weitere bevorzugte Ausführungsformen betreffen Körper, bei denen bestimmte Partien durch Farbgebung oder Beschriftung hervorgehoben sind und als wahrnehmbare Merkmale für die Sortierung nach dem Absorptionsgrad dienen können.

Nach der Erfindung kann unter Einsatz der erfindungsgemäßen Absorptionsmittel ein Absorptionsverfahren ausgeführt werden, bei dem der das Absorptionsmittel bildende Körper zunächst in einem ersten Arbeitsschritt auf eine Flüssigkeitsoberfläche aufgebracht wird. Die Art des Aufbringens ist dabei weitgehend freigestellt wie ebenso die zum Aufbringen benutzten Mittel. Insoweit kann das Aufbringen sowohl manuell als auch mit technischen Hilfsmitteln ausgeführt werden.

Nach dem Aufbringen auf die Flüssigkeitsoberfläche nimmt der Körper wie oben beschrieben seine erste Orientierung ein. Er schwimmt dabei mit nur geringer Eintauchtiefe und hat eine Ausrichtung entsprechend der eingenommenen ersten Lage.

Mit dem Aufbringen auf die Flüssigkeit beginnt der Absorptionsprozess, wobei immer dann, wenn der Körper mit einer zu absorbierenden Substanz in Berührung kommt, ein Absorptionsvorgang beginnt.

Die Absorptionsvorgänge sind stochastisch ablaufende Prozesse, die zunächst den auf der Flüssigkeitsoberfläche schwimmenden Körper instabil machen und bewirken, dass dieser seine Lage in der Flüssigkeit ändert.

Mit dem Erreichen der maximalen Sättigungskapazität hat sich die Lage des Körpers in der Flüssigkeit so weit verändert, dass das Erreichen der Sättigungsgrenze in den meisten Fällen bereits visuell wahrnehmbar ist.

Nachfolgend wird manuell, mit mechanisierten oder mit automatisierten Verfahren der maximal gesättigte Körper von der Flüssigkeitsoberfläche abgesammelt.

Nachfolgend kann bei Erfordernis der oben beschriebene Verfahrensablauf beliebig oft wiederholt werden.

Eine Ausgestaltungsform des Verfahrens sieht einen zusätzlichen Schritt zur Detektierung eines Körpers mit erreichter maximaler Sättigung der Gestalt vor, dass der Körper ein RFID-Element besitzt, durch dessen Lage bei Erreichen maximaler Sättigung ein Sensor eine entsprechende Information gewinnen kann und auf diese Weise ein Signal bzw. ein Steuerbefehl für eine Sammeleinrichtung erzeugt wird.

Die Erfindung wird nachstehend anhand einiger Ausführungsbeispiele und Zeichnungen näher erläutert. Dabei zeigen:
- Fig. 1a - d: -den Vorgang der Absorption und die dabei entstehenden Lageänderungen des Körpers am Beispiel eines Körpers mit einem Querschnitt, der ein gleichseitiges Dreieck ist.
- Fig. 2a - b: -das erfindungsgemäße Absorptionsmittel mit einem Körper, der einen tropfenförmigen Querschnitt hat.

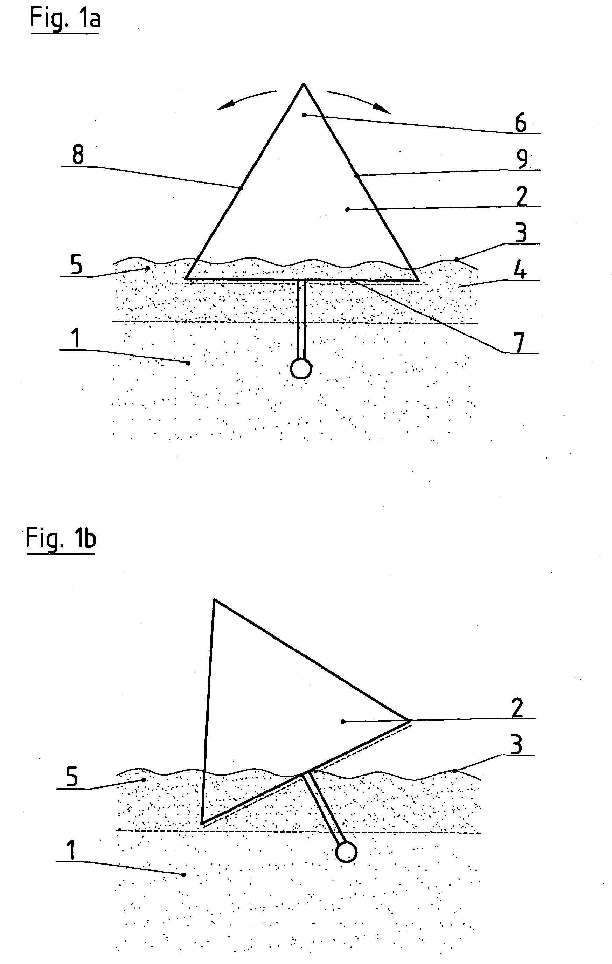

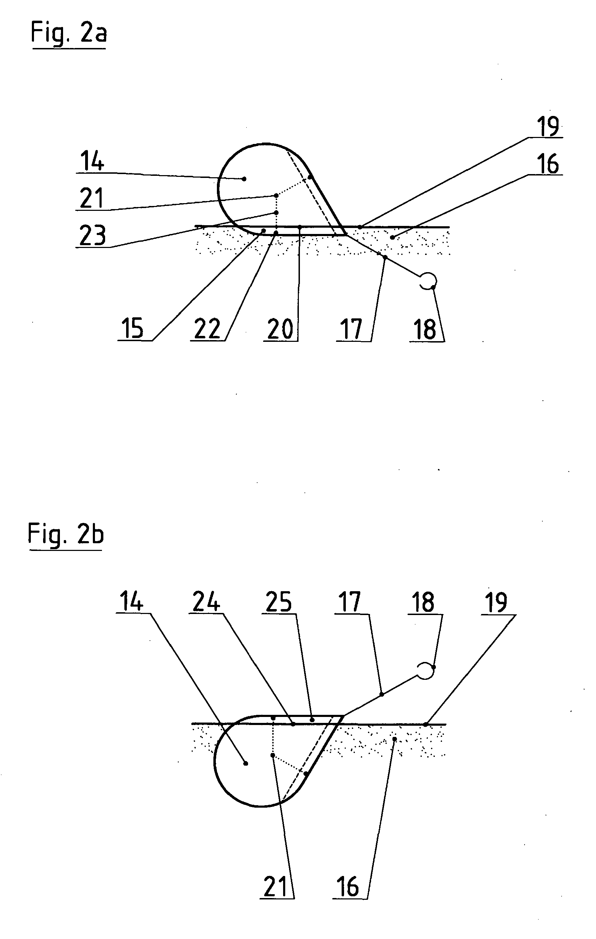

In einer Flüssigkeit **1** schwimmt ein Körper **2,** der einen Querschnitt hat, der in etwa einem gleichseitigen Dreieck entspricht. Der Körper **2** kann ein langgestreckter Körper sein, wobei die Fig. 1a bis d und Fig. 2 lediglich die Stirnseite desselben zeigen. Ebenso kann der Körper **2** ein Kegel oder eine Pyramide sein.

Der Körper **2** schwimmt in einer Flüssigkeit **1** und ist gegenüber der Oberfläche **3** einer Flüssigkeit **1** um einen gewissen Betrag **4** eingetaucht. Die zu absorbierenden Substanzen befinden sich entweder auf der Oberfläche **3** schwimmend oder sie sind teilweise mit der Flüssigkeit **1** vermischt bzw. emulgiert und bilden eine Zone **5** nahe dem Bereich der Oberfläche **3.**

Der Körper **2** ragt in die Zone **5** hinein und beginnt mit dem Absorbieren der aufzunehmenden Substanzen.

Die zu absorbierenden Substanzen sind gegenüber der Flüssigkeit **1** schwimmfähig, haben also eine geringere Dichte als diese. Durch die Absorption wird allmählich die Dichte des Absorptionsmittels größer und dessen Eintauchtiefe **4** in der Flüssigkeit **1** kann sich vergrößern. Die daraus resultierende Lageinstabilität des Körpers **2** führt dazu, dass bei einem ausreichend großen Sättigungsgrad der Körper **2** sich zur Seite neigt, schließlich mit einer der beiden Seitenflächen **8** oder **9** in die Flüssigkeit **1** eintaucht und schließlich eine stabile Lage einnimmt, bei der die Spitze **6** des Körpers **2** unten und die Bodenfläche **7** nach oben gerichtet ist.

Durch dieses Verhalten des Körpers **2** kann der Absorptionsgrad wahrgenommen werden. Zu Beginn liegt er mit der Spitze **6** nach oben. Bei zunehmendem Absorptionsgrad neigt er sich zur Seite und schließlich zeigt nach einer Wendung um 180° die Bodenfläche **7** nach oben.

Bei dem in Fig. 2 a und 2 b dargestellten tropfenförmigen Körper **14** kann eine deutlich kleinere Veränderung der Lage für die Erkennung des Sättigungsgrades ausreichend sein.

Körper **14** liegt zunächst so auf einer Flüssigkeit, dass er mit einem Teilbereich **15** seines Volumens in die Flüssigkeit **16** eintaucht. Der Teilbereich **15** des Volumens beträgt dabei in etwa 10 % des Gesamtvolumens des Körpers **14.**

Die Ausrichtung des Körpers **14** auf der Flüssigkeit **16** ist so, dass ein Signal- **17** oder Handhabungselement mit seiner daran vorhandenen Schlaufe **18** unter der Oberfläche **19** der Flüssigkeit **16** liegt und deshalb nicht sichtbar ist. Die Ebene **20** im Körper **14** deckt sich mit der Oberfläche **19** der Flüssigkeit **16.**

Für die erste Orientierung des Körpers **14** gilt dabei, dass dessen Schwerpunkt **21** mit dem Schwerpunkt **22** des abgetrennten Volumens **15** verbunden eine Gerade **23** ergibt, die im rechten Winkel zur Ebene **20** steht. Das ist die Bedingung für die Ausgangslage des Körpers **14.** In dieser ersten Gleichgewichtslage schwimmt der Körper **14** gewissermaßen auf der Flüssigkeit **16.**

Mit dem Einsetzen des Absorptionsprozesses wird die Dichte des Körpers **14 grö**ßer und in der Folge taucht der Körper **14** tiefer in Flüssigkeit **16** ein. Mit Erreichen des maximalen Sättigungsgrades wird ein Zustand erreicht, bei dem eine Ebene **24,** die der Oberfläche **19** der Flüssigkeit **16** entspricht, einen Volumenanteil **25** vom Gesamtvolumen des Körpers **14** abtrennt, das noch über der Oberfläche **19** liegt. Mithin hat sich der Körper **14** soweit geneigt, dass das Signal- **17** und Handhabungselement mit der Schlaufe 18 über der Oberfläche **19** der Flüssigkeit **16** liegt und den Zugriff mit mechanisierten oder automatisierten Mitteln zum Absammeln erlaubt.

Während des Absorptionsprozesses hat sich der Körper **14** um einen Winkelbetrag von etwa 60° geneigt. Es ist möglich, durch die Gestaltung bestimmter Geometrien für die Absorptionsmittel unterschiedliche Winkelveränderungen zu erreichen. Insoweit kann es ausreichend sein, wenn eine Winkelveränderung von wenigstens 5° erreicht wird.

In einem Fall, dass die Flüssigkeit **1** Wasser ist und die zu absorbierenden Substanzen beispielsweise auf der Oberfläche **3** schwimmende ölige Substanzen sind, kann ein Körper **2** die stabile Gleichgewichtslage bereits dann einnehmen, wenn er mit ca. 57 % seines Volumens in die Flüssigkeit **1** eingetaucht ist.

Zur besseren Erkennbarkeit kann die Bodenfläche **7** eine zusätzliche Markierung **10** tragen. Die Markierung **10** kann als vollflächige Farbgebung, als Beschriftung oder als grafische Darstellung ausgeführt sein.

Zusätzlich kann ein Element **11,** bestehend aus einem Stab **12** und einem Körper **13** in das Absorptionsmittel eingesetzt werden. Der Körper **13** kann zugleich als Angriffspunkt für manuelles oder maschinenunterstütztes Sammeln gefüllter Absorptionsmittel eingesetzt werden.

Der Körper **13** kann des Weiteren eine besondere optische Wirkung entfalten, beispielsweise durch eine Farbgebung in Signalfarbe.

Es ist ebenso möglich, anstelle des Körpers **13** den Stab **12** zu verlängern und diesen mit einem Haken oder einer Öse zu versehen. Dadurch können speziell angepasste technische Mittel zum Absammeln der Körper **2** eingesetzt werden.

Das eingesetzte Absorptionsverfahren hat den Vorteil, dass es nahezu ohne äußere Eingriffe, ohne anlagentechnischen Aufwand und darüber hinaus mit nur geringem materiellen und Kostenaufwand durchführbar ist. Die Körper **2** und/oder **14** werden auf die Oberfläche **3** einer Flüssigkeit **1** aufgebracht, wobei diese im einfachsten Fall einfach aus einem Behältnis ausgeschüttet werden können. Ebenso mithilfe beliebiger Fördermittel.

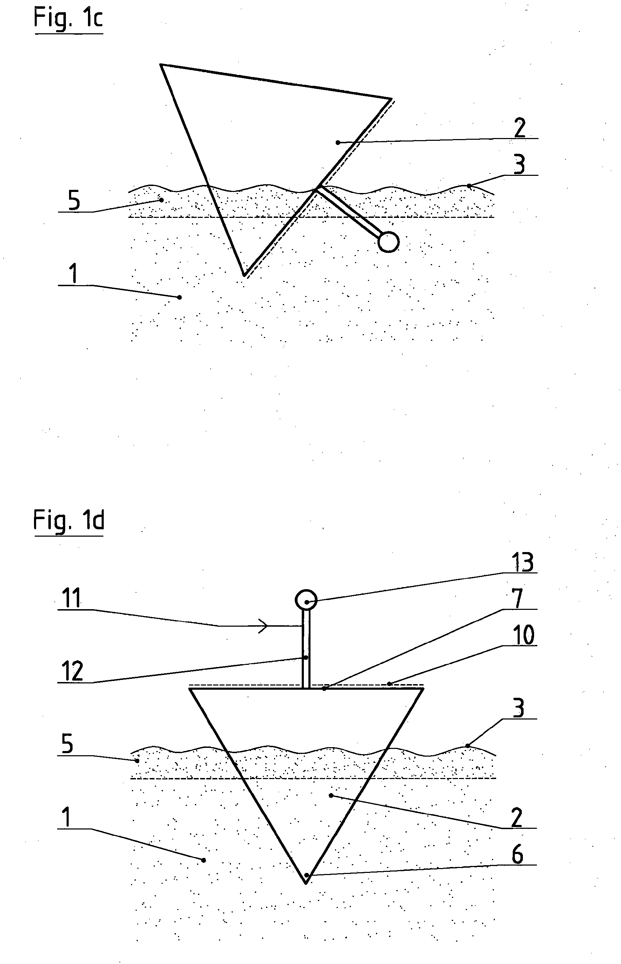

Dabei kommt es nicht darauf an, dass am Beginn des Absorptionsvorganges die in Fig. 1 dargestellte Normallage eingestellt wird. Nach Erreichen des Sättigungszustandes geht der Körper **2** jedenfalls in die in Fig. 1d abgebildete Lage und kann so zuverlässig detektiert werden.

Gesättigte Körper **2** können auf verschiedene Weise aus der Flüssigkeit **1** entfernt werden. So beispielsweise durch manuelles, mechanisches oder pneumatisches Absammeln. Bei Anwendung mechanischer Mittel sind vielfältige Möglichkeiten gegeben, die abhängig sind von der Ausstattung der Körper **2** mit einem zusätzlichen Element **11** oder nicht.

Der in der Erfindung beschriebene Vorgang des Sichtbarmachens des Absorptionsgrades durch äußere Merkmale kann neben langgestreckten Körpern auch mit Körpern **2** mit kürzerer Baulänge, wie beispielsweise mit kegel-, kegelstumpf-, pyramiden-, pyramidenstumpfförmigen geometrischen Körpern oder an diese Formen angenäherte Raumformen erreicht werden. Bei entsprechender Dimensionierung können diese Körper **2** deshalb auch als Streumittel oder als größere Baueinheit ausgeführt sein. Es ist jede Raumform geeignet, die bei einer Verlagerung ihres Schwerpunktes oder in einer Flüssigkeit schwimmend ihre Lage signifikant ändert.

Die Erfindung hat also den Vorteil, dass sie es ermöglicht, Absorptionsmittel zu erzeugen, die auf oder in Flüssigkeiten schwimmend eine erkennbare Lageänderung erfahren. Aufgrund dieser Lageänderung bestehen Möglichkeiten, neue, noch nicht gesättigte Absorptionsmittel von gesättigten zu unterscheiden und die gesättigten zu entfernen.

### Bezugszeichenliste

- 1: Flüssigkeit
- 2: Körper
- 3: Oberfläche
- 4: Eintauchtiefe
- 5: Zone
- 6: Spitze
- 7: Bodenfläche
- 8: Seitenfläche
- 9: Seitenfläche
- 10: Markierung
- 11: Element
- 12: Stab
- 13: Körper
- 14: Körper
- 15: Volumen
- 16: Flüssigkeit
- 17: Signalelement
- 18: Schlaufe
- 19: Oberfläche
- 20: Ebene
- 21: Schwerpunkt
- 22: Schwerpunkt
- 23: Gerade
- 24: Ebene
- 25: Volumenanteil

## Patentansprüche

1. Absorptionsmittel, das ein Körper (2); (14) ist, der auf der Oberfläche (3); (19) einer Flüssigkeit (1); (16) schwimmfähig ist, dessen gesamte Oberfläche absorbieren kann und das den Sättigungsgrad anzeigt,
**dadurch gekennzeichnet, dass**
der Körper (2); (14)
aus einem Werkstoff mit einer gleichmäßigen Dichteverteilung und gegenüber der Dichte der Flüssigkeit (1); (16) geringen Dichte besteht,
gegenüber der Flüssigkeit (1); (16) eine geringe Aufnahmekapazität und gegenüber gleichfalls auf der Oberfläche (3); (19) schwimmenden und zu absorbierenden Substanzen eine große Aufnahmekapazität hat,
den Sättigungsgrad dadurch anzeigt, dass er im ungesättigten Ausgangszustand auf der Oberfläche (3); (19) schwimmend eine erste Orientierung hat und bei Sättigung eine stabile Gleichgewichtslage einnimmt, die sich als zweite Orientierung vom Ausgangszustand unterscheiden lässt,
im ungesättigten Zustand mit geringer Eintauchtiefe und im gesättigten Zustand mit großer Eintauchtiefe an der Oberfläche (3); (19) der Flüssigkeit (1); (16) schwimmt,
wobei der Körper (2); (14) im ungesättigten Zustand in seiner ersten Orientierung eine Lage hat, bei der eine durch den Körper (2); (14) ziehbare Ebene, die der der Oberfläche (3); (19) der Flüssigkeit (1); (16) entspricht von dem Körper (2); (14) einen Anteil des Gesamtvolumens des Körpers (2); (14) durchschneidet, dessen Betrag dem Volumen der aufgrund des Eigengewichts des Körpers (2); (14) verdrängten Flüssigkeit entspricht und der Körper (2); (14) im gesättigten Zustand in einer zweiten Orientierung und stabilen Gleichgewichtslage so in der Flüssigkeit (1); (16) schwimmt, dass eine durch den Körper (2); (14) ziehbare Ebene, die der Ebene der Oberfläche (3); (19) der Flüssigkeit (1); (16) entspricht, so liegt, dass nur noch ein Anteil des Volumens des Körpers (2); (14) aus der Flüssigkeit (1); (16) herausragt.

2. Absorptionsmittel nach Patentanspruch 1,
**dadurch gekennzeichnet, dass**
der Körper (2); (14) eine Form mit Cₙ-Symmetrie, wobei n eine Zahl größer 1 ist, Rotationssymmetrie oder Spiegelsymmetrie hat.

3. Absorptionsmittel, nach einem der Patentansprüche 1 oder 2,
**dadurch gekennzeichnet, dass**
durch den Körper (2); (14) mindestens 2 Ebenen ziehbar sind, die der Ebene der Flüssigkeit (1); (16) entsprechen durch die jeweils weniger als 10 % des Gesamtvolumens des Körpers (2); (14) abgetrennt werden, dergestalt, dass im ungesättigtem Zustand weniger als 10 % des Volumens des Körpers (2); (14) in die Flüssigkeit (1); (16) eintauchen, und im gesättigten Zustand weniger als 10 % des Volumens des Körpers (2); (14) aus der Flüssigkeit (1); (16) herausragen wobei die Ebenen jeweils im rechten Winkel zu einer Verbindungslinie liegen, die zwischen dem Schwerpunkt des Körpers (2); (14) und dem Schwerpunkt des abgetrennten Volumens ziehbar ist und zueinander einen Winkel von wenigstens 10° haben.

4. Absorptionsmittel nach einem der Patentansprüche 1 bis 3,
**dadurch gekennzeichnet, dass**
der Körper (2); (14) seine Orientierung beim Übergang zum stabilen Gleichgewichtszustand dergestalt ändert, dass sie von der Ausgangslage um wenigstens 5° abweicht.

5. Absorptionsmittel nach einem der Patentansprüche 1 bis 4,
**dadurch gekennzeichnet, dass**
der Körper (2); (14)
eine Raumform mit einem Querschnitt, der weitgehend dreieck-, trapez-, tropfen-, ei- oder ellipsenförmig ist,
eine
pyramidenförmige oder eine pyramidenstumpfförmige Raumform hat, eine rotationssymmetrische Raumform eines Kegels, eines Kegelabschnitts, eines Kugelabschnitts oder eines Abschnitts eines Ellipsoids oder
einen zusammengesetzten Querschnitt aus einem Dreieck und einem an dessen Grundlinie angeordneten Kreis- oder Ellipsensegment hat.

6. Absorptionsmittel nach einem der Patentansprüche 1 bis 5,
**dadurch gekennzeichnet, dass**
die erste und/oder weitere Gleichgewichtslagen des Körpers (2); (14) durch äußere Formmerkmale und/oder Elemente (11); (17) und/oder durch Farbkennzeichnungen und/oder durch Beschriftungen und/oder durch RFID-Elemente ermittelbar sind.

7. Absorptionsmittel nach einem der Ansprüche 1 bis 6,
**dadurch gekennzeichnet, dass**
der Körper (2); (14) aus Faserstoffen, Haaren, Schaumstoffen oder aus partikelförmig vorliegenden Stoffen erzeugt ist.

8. Absorptionsmittel, das den Sättigungsgrad anzeigt, nach einem der Ansprüche 1 bis 7,
**dadurch gekennzeichnet, dass**
der Körper (2); (14) ein Wickelkörper, ein nachgeformter Wickelkörper, ein Presskörper, ein verfilzter Presskörper, ein Sinterkörper oder ein Körper aus einem mit einem Bindemittel verfestigten Werkstoff ist.

9. Absorptionsmittel, das den Sättigungsgrad anzeigt, nach einem der Patentansprüche 7 oder 8,
**dadurch gekennzeichnet, dass**
der den Körper (2); (14) ausfüllende Werkstoff mit einem den Absorptionsvorgang beschleunigenden Zusatzstoff oder Zusatzstoffgemisch angereichert ist.

10. Absorptionsmittel, das den Sättigungsgrad anzeigt, nach einem der Patentansprüche 1 bis 9,
**dadurch gekennzeichnet, dass**
der Körper (2); (14) mit einem Element (11) oder einem Signalelement (17) versehen ist, das die Wahrnehmbarkeit der Gleichgewichtslage und/oder ein Aufnehmen der Körper (2); (14) mit Hilfsmitteln ermöglicht.

11. Absorptionsmittel nach Patentanspruch 10,
**dadurch gekennzeichnet, dass**
der Körper (2); (14) mit einem Signalelement in der Form eines RFID-Elements ausgestattet ist.

12. Absorptionsverfahren mit einem Körper (2); (14) gemäß einem der Patentansprüche 1 bis 9,
**dadurch gekennzeichnet, dass**
derselbe in einem ersten Arbeitsschritt auf eine Oberfläche (3); (19) einer Flüssigkeit (1); (16) gebracht wird,
auf dieser Oberfläche (3); (19) mit einer Eintauchtiefe, die sich aus dem infolge des Eigengewichts des Körpers (2); (14) verdrängten Flüssigkeitsvolumen ergibt, schwimmend eine erste Orientierung einnimmt,
gleichzeitig und nachfolgend gleichfalls auf der Flüssigkeit (1); (16) schwimmende Substanzen absorbiert, wodurch sich die Dichte des Körpers (2); (14) stetig erhöht,
durch die erhöhte Dichte eine Lageänderung des Körpers (2); (14) in der Flüssigkeit (1); (16) erfolgt und die Eintauchtiefe des Körpers (2); (14) sich vergrößert, wobei sich die Eintauchtiefe durch das Eigengewicht des Körpers (2); (14) und das Gewicht der absorbierenden Stoffe sowie das dadurch verdrängte Flüssigkeitsvolumen ergibt,
nachfolgend eine stabile Gleichgewichtslage durch den Körper (2); (14) eingenommen wird
und der Vorgang der Lageveränderung während und/oder nach dem Absorptionsvorgang visuell festgestellt wird.

13. Absorptionsverfahren nach Patentanspruch 12 mit einem Körper (2); (14) gemäß einem der Patentansprüche 1 bis 10,
**dadurch gekennzeichnet, dass**
der Vorgang der Lageveränderung während und/oder nach dem Absorptionsvorgang mechanisch festgestellt wird.

14. Absorptionsverfahren nach Patentanspruch 12 mit einem Körper (2); (14) gemäß Patentanspruch 11,
**dadurch gekennzeichnet, dass**
der Vorgang der Lageveränderung während und/oder nach dem Absorptionsvorgang induktiv und/oder mit hochfrequenten Schwingungen festgestellt wird.

15. Verwendung eines Absorptionsmittels in der Form eines Körpers (2); (14) nach einem der Patentansprüche 1 bis 9 zur Absorption auf Oberflächen (3); (19) von Flüssigkeiten (1); (16) schwimmender Stoffe.

## Claims

1. Absorption means which is a body (2); (14) which is floatable on the surface (3); (19) of a liquid (1); (16), the entire surface of which can absorb and which displays the degree of saturation,
**characterized in that**
the body (2); (14) consists of a material having a uniform density distribution and low density compared with the density of the liquid (1); (16),
which has a low absorption capacity compared with the liquid (1); (16) and a high absorption capacity for substances floating at the same time on the surface (3); (19) and which are to be absorbed,
which displays the degree of saturation whereby it has a first orientation in the unsaturated initial state floating on the surface (3); (19) and at saturation adopts a stable equilibrium position which can be distinguished from the initial state as second orientation,
which in the unsaturated state floats with low immersion depth and in the saturated state floats with high immersion depth on the surface (3); (19) of the liquid (1); (16),
wherein the body (2); (14) in the unsaturated state in its first orientation has a position in which a plane which can be drawn through the body (2); (14) which corresponds to that of the surface (3); (19) of the liquid (1); (16), intersects from the body (2); (14) a fraction of the total volume of the body (2); (14) the magnitude of which corresponds to the volume of the liquid displaced as a result of the own weight of the body (2); (14)
and the body (2); (14) in the saturated state in a second orientation and stable equilibrium position floats in the liquid (1); (16) so that the plane which can be drawn through the body (2); (14) which corresponds to the plane of the surface (3); (19) of the liquid (1); (16) lies such that only a fraction of the volume of the body (2); (14) projects from the liquid (1); (16).

2. The absorption means according to patent claim 1,
**characterized in that**
the body (2); (14) has a shape with Cₙ symmetry, where n is a number greater than 1, rotational symmetry or mirror symmetry.

3. The absorption means according to any one of patent claims 1 or 2,
**characterized in that**
at least two planes can be drawn through the body (2); (14), which correspond to the plane of the liquid (1); (16) through which in each case less than 10% of the total volume of the body (2); (14) is separated in such a manner that in the unsaturated state less than 10% of the volume of the body (2); (14) is immersed in the liquid (1); (16) and in the saturated state less than 10% of the volume of the body (2); (14) projects from the liquid (1); (16), wherein the planes each lie at right angles to a connecting line which can be drawn between the centre of gravity of the body (2); (14) and the centre of gravity of the separated volume and which have an angle of at least 10° with respect to one another.

4. The absorption means according to any one of patent claims 1 to 3,
**characterized in that**
the body (2); (14) changes its orientation on transition to the stable equilibrium state in such a manner that it deviates by less than 5° from the initial position.

5. The absorption means according to any one of patent claims 1 to 4,
**characterized in that**
the body (2); (14) has a three-dimensional shape having a cross-section which is largely triangular, trapezoidal, droplet-shaped, egg-shaped or elliptical, a pyramid-shaped or truncated-pyramid-shaped three-dimensional shape, a rotationally symmetrical three-dimensional shape of a cone, a cone segment, a spherical segment or a segment of an ellipsoid, or has a combined cross-section comprising a triangle and a circular or elliptical segment disposed on the base line thereof.

6. The absorption means according to any one of patent claims 1 to 5,
**characterized in that**
the first and/or further equilibrium positions of the body (2); (14) can be determined by external form features and/or elements (11); (17) and/or by colour identification and/or inscriptions and/or by RFID elements.

7. The absorption means according to any one of patent claims 1 to 6,
**characterized in that**
the body (2); (14) is produced from fibrous materials, hairs, foams or substances present in particle form.

8. Absorption means which indicates the degree of saturation according to any one of claims 1 to 7,
**characterized in that**
the body (2); (14) is a winding body, a remoulded winding body, a pressed body, a sintered body or a body made of a material solidified with a binder.

9. Absorption means which indicates the degree of saturation according to any one of claims 7 or 8,
**characterized in that**
the material filling the body (2); (14) is enriched with an additive or additive mixture which accelerates the absorption process.

10. Absorption means which indicates the degree of saturation according to any one of claims 1 to 9,
**characterized in that**
the body (2); (14) is provided with an element (11) or a signal element (17) which enables the perceptibility of the equilibrium position and/or a take-up of the body (2); (14) with auxiliary means.

11. The absorption means according to patent claim 10,
**characterized in that**
the body (2); (14) is equipped with a signal element in the form of an RFID element.

12. An absorption method with a body (2); (14) according to any one of patent claims 1 to 9,
**characterized in that**
the same is brought onto a surface (3); (19) of a liquid (1); (16) in a first work step,
adopts a first orientation floating on this surface (3); (19) with an immersion depth obtained from the volume of liquid displaced as a result of the own weight of the body (2); (14),
simultaneously and subsequently likewise absorbs substances floating on the liquid (1); (16) whereby the density of the body (2); (14) increases continuously,
as a result of the increased density a change in position of the body (2); (14) in the liquid (1); (16) takes place and the immersion depth of the body (2); (14) increases, where the immersion depth is obtained from the own weight of the body (2); (14) and the weight of the absorbing substances as well as the volume of liquid displaced thereby,
subsequently a stable equilibrium position is adopted by the body (2); (14)
and the process of change in position is determined visually during and/or after the absorption process.

13. The absorption method according to patent claim 12 with a body (2); (14) according to any one of patent claims 1 to 10,
**characterized in that**
the process of change in position is determined mechanically during and/or after the absorption process.

14. The absorption method according to patent claim 12 with a body (2); (14) according to patent claim 11,
**characterized in that**
the process of change in position is determined inductively and/or using high-frequency oscillations during and/or after the absorption process.

15. Use of an absorption means in the form of a body (2); (14) according to any one of patent claims 1 to 9 for absorption of substances floating on surfaces (3); (19) of liquids (1); (16).

## Revendications

1. Moyen d'absorption qui est un corps (2) ; (14) qui peut flotter sur la surface (3); (19) d'un liquide (1) ; (16), peut absorber toute sa surface et qui indique le degré de saturation,
**caractérisé en ce que**
le corps (2) ; (14)
est composé d'un matériau ayant une répartition de densité régulière et une densité plus faible que la densité du liquide (1) ; (16),
a une plus faible capacité d'absorption que le liquide (1) ; (16) et une plus forte capacité d'absorption que les substances à absorber flottant également sur la surface (3) ; (19),
indique le degré de saturation du fait qu'il a une première orientation en flottant en état initial non saturé sur la surface (3) ; (19) et prend, en cas de saturation, une position stable d'équilibre qu'on peut distinguer comme seconde orientation par rapport à l'état initial,
flotte à la surface (3) ; (19) du liquide (1) ; (16) en plongeant à une faible profondeur en état non saturé et avec une grande profondeur en état saturé,
le corps (2) ; (14) ayant, en état non saturé, dans sa première orientation, une position dans laquelle un plan pouvant être tiré à travers le corps (2) ; (14) et qui équivaut à la surface (3) ; (19) du liquide (1) ; (16), sépare du corps (2) ; (14) une partie du volume total du corps (2) ; (14), volume dont l'importance équivaut au volume du liquide refoulé du fait du poids propre du corps (2) ; (14)
et le corps (2) ; (14) flottant, en état saturé, dans une seconde orientation et position stable d'équilibre dans le liquide (1) ; (16) de manière à ce qu'un plan pouvant être tiré à travers le corps (2) ; (14) et qui équivaut à la surface (3) ; (19) du liquide (1) ; (16), soit positionné de manière à ce que seule une partie du volume total du corps (2) ; (14) dépasse encore du liquide (1) ; (16).

2. Moyen d'absorption selon la revendication 1 du brevet,
**caractérisé en ce que**
le corps (2) ; (14) a une forme à symétrie Cₙ, n étant un chiffre supérieur à 1, symétrie en rotation ou symétrie miroir.

3. Moyen d'absorption selon une des revendications 1 ou 2 du brevet,
**caractérisé en ce**
**qu'**on peut tirer à travers le corps (2) ; (14) au moins 2 plans qui équivalent au plan du liquide (1) ; (16) et par lesquels respectivement moins de 10 % du volume total du corps (2) ; (14) sont séparés de manière à ce que, en état non saturé, moins de 10 % du volume du corps (2) ; (14) plongent dans le liquide (1) ; (16) et, en état saturé, moins de 10 % du volume du corps (2) ; (14) dépassent du liquide (1) ; (16), les plans décrivant respectivement un angle droit par rapport à une ligne de liaison qui peut être tirée entre le centre de gravité du corps (2) ; (14) et le centre de gravité du volume séparé et formant un angle d'au moins 10° entre eux.

4. Moyen d'absorption selon une des revendications 1 à 3 du brevet,
**caractérisé en ce que**
le corps (2) ; (14) change d'orientation en passant dans son état d'équilibre, de sorte qu'il s'écarte d'au moins 5° de la position initiale.

5. Moyen d'absorption selon une des revendications 1 à 4 du brevet,
**caractérisé en ce que**
le corps (2) ; (14)
est une forme dans l'espace ayant une section transversale en grande partie en forme de triangle, trapèze, goutte, oeuf ou ellipse,
a une forme de pyramide ou de tronc pyramidal,
a une forme dans l'espace symétrique en rotation de cône, de section conique, de section sphérique ou de section d'ellipsoïde
ou une section transversale composée d'un triangle et d'un segment circulaire ou elliptique disposé au niveau de sa ligne de base.

6. Moyen d'absorption selon une des revendications 1 à 5 du brevet,
**caractérisé en ce que**
les première et/ou autre positions d'équilibre du corps (2) ; (14) peuvent être déterminées par des caractéristiques extérieures de forme et/ou des éléments (11) ; (17) et/ou par des marquages colorés et/ou par des inscriptions et/ou par des éléments RFID.

7. Moyen d'absorption selon une des revendications 1 à 6 du brevet,
**caractérisé en ce que**
le corps (2) ; (14) est fabriqué à partir de matières fibreuses, de cheveux, de mousses et/ou de substances se présentant sous forme de particules.

8. Moyen d'absorption affichant le degré de saturation selon une des revendications 1 à 7 du brevet,
**caractérisé en ce que**
le corps (2) ; (14) est un corps enroulé, un corps enroulé refaçonné, un corps pressé, un corps pressé feutré, un corps fritté ou un corps fait d'un matériau consolidé avec un liant.

9. Moyen d'absorption affichant le degré de saturation selon une des revendications 7 ou 8 du brevet,
**caractérisé en ce que**
le matériau remplissant le corps (2) ; (14) est enrichi d'un additif ou d'un mélange d'additifs accélérant le processus d'absorption.

10. Moyen d'absorption affichant le degré de saturation selon une des revendications 1 à 9 du brevet,
**caractérisé en ce que**
le corps (2) ; (14) est pourvu d'un élément (11) ou d'un élément de signalisation (17) qui permet de se rendre compte de l'état d'équilibre et/ou d'une absorption des corps (2) ; (14) à l'aide de moyens auxiliaires.

11. Moyen d'absorption selon la revendication 10 du brevet,
**caractérisé en ce que**
le corps (2) ; (14) est pourvu d'un élément de signalisation sous la forme d'un élément RFID.

12. Procédé d'absorption comportant un corps (2) ; (14) selon une des revendications 1 à 9 du brevet,
**caractérisé en ce que**
celui-ci est amené dans une première étape opératoire sur une surface (3) ; (19) d'un liquide (1) ; (16),
prend en flottant sur cette surface (3) ; (19) une première orientation qui résulte du volume de liquide refoulé du fait du poids propre du corps (2) ; (14),
absorbe simultanément et consécutivement les substances flottant également sur le liquide (1) ; (16), ce qui fait augmenter constamment la densité du corps (2) ; (14),
un changement de position du corps (2) ; (14) dans le liquide (1) ; (16) se produit du fait de la densité accrue et la profondeur de plongée du corps (2) ; (14) ; augmente, la profondeur de plongée résultant du poids propre du corps (2) ; (14) et du poids des substances absorbantes, de même que du volume de liquide ainsi refoulé,
le corps (2) ; (14) prend ensuite un état d'équilibre
et le processus de changement de position est constaté visuellement pendant et/ou après le processus d'absorption.

13. Procédé d'absorption selon la revendication 12 du brevet, comportant un corps (2) ; (14) selon une des revendications 1 à 10 du brevet,
**caractérisé en ce que**
le processus de changement de position est constaté mécaniquement pendant et/ou après le processus d'absorption.

14. Procédé d'absorption selon la revendication 12 du brevet, comportant un corps (2) ; (14) selon la revendication 11 du brevet,
**caractérisé en ce que**
le processus de changement de position est constaté visuellement de manière inductive et/ou avec des vibrations à haute fréquence pendant et/ou après le processus d'absorption.

15. Utilisation d'un moyen absorbant sous la forme d'un corps (2) ; (14) selon une des revendications 1 à 9 du brevet pour l'absorption sur de substances flottant sur des surfaces (3) ; (19) de liquides (1) ; (16).
